# EUROPEAN PATENT APPLICATION

(11) **EP 4 765 360 A1**
(43) Date of publication of application: **24.06.2026**
(21) Application number: 24904446.2
(22) Date of filing: 13.12.2024
(51) Int. Cl.: H01M 50/105, H01M 50/124, H01M 50/183, B29C 65/00, B29C 65/02

(54) **SECONDARY BATTERY MANUFACTURING METHOD**

(30) Priority: 15.12.2023 KR 20230183511; 11.12.2024 KR 20240183606
(71) Applicant: LG Energy Solution, Ltd., Seoul 07335 (KR)
(72) Inventor: CHOI, Ji Eun, Daejeon 34122 (KR); KIM, Sang Hun, Daejeon 34122 (KR); YU, Hyung Kyun, Daejeon 34122 (KR); LEE, Jae Ho, Daejeon 34122 (KR); LEE, Ji Sun, Daejeon 34122 (KR)
(74) Representative: Goddar, Heinz J.
(86) International application number: PCT/KR2024/096963
(87) International publication number: WO 2025/127882

(57) **Abstract**

The present disclosure relates to a method for manufacturing a secondary battery, and more specifically, to a method for manufacturing a secondary battery that can be charged and discharged. A method for manufacturing a secondary battery according to an embodiment of the present disclosure may include a preparation step of preparing an electrode assembly and an exterior material sheet including a metal layer; a packaging step of packaging the electrode assembly using the exterior material sheet and a cover member; and a coupling step of coupling the cover member and the exterior material sheet by heating or pressurizing the cover member and the exterior material sheet with a sealing belt.

## Description

### TECHNICAL FIELD

### CROSS-REFERENCE TO RELATED APPLICATIONS

The present application claims priority to Korean Patent Application No. 10-2023-0183511 filed on December 15, 2023 and Korean Patent Application No. 10-2024-0183606 filed on December 11, 2024 in the Republic of Korea, the disclosures of which are incorporated herein by reference.

### TECHNICAL FIELD

The present disclosure relates to a method for manufacturing a secondary battery, and more specifically, to a method for manufacturing a secondary battery that can be charged and discharged.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

The secondary battery may be classified in various ways depending on the type of exterior material that accommodates an electrode assembly. For example, the secondary battery may be classified into a prismatic secondary battery in which an electrode assembly is accommodated inside a prismatic metal can, a cylindrical secondary battery in which an electrode assembly is accommodated inside a cylindrical metal can, and a pouch-type secondary battery in which an electrode assembly is accommodated inside a pouch case.

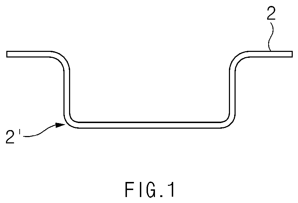

Such a pouch-type secondary battery may be manufactured by bonding a pouch-type film in which a cup portion is formed. FIG. 1 is a view showing a cup portion of a pouch-type secondary battery. FIG. 1 shows a pouch film 2 that is pressed downward. A cup portion 2' concavely recessed is formed in the pouch film 2. At this time, the molding depth of the cup portion 2' is limited due to the material properties of the pouch film 2. Therefore, it is difficult to mold the cup portion 2' deep enough to increase the capacity of the secondary battery, and as the thickness of the pouch film 2 becomes thinner during the molding of the cup portion 2', there is a problem that defects such as cracks easily occur in the cup portion 2'.

Meanwhile, in relation to the manufacture of a pouch-type secondary battery, gas is generated inside the secondary battery by the assembly and activation process of the electrode, and this internal gas should be discharged to the outside through a degassing process. At this time, there is a problem that a portion of the pouch case to which the pouch film is bonded should be discarded after the degassing process.

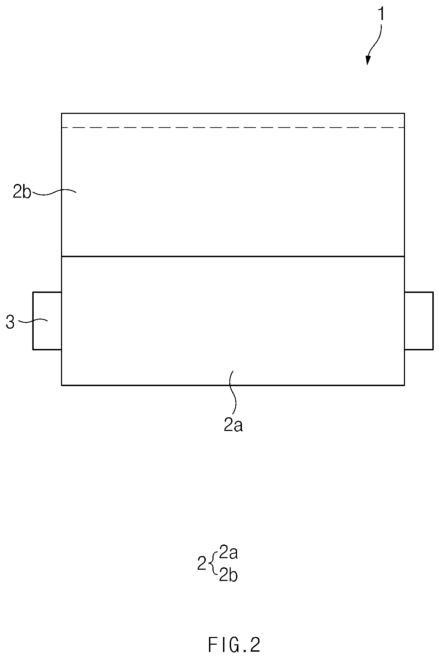

FIG. 2 is a view for describing that a portion of a pouch case is discarded after a degassing process. FIG. 2 shows a pouch-type secondary battery 1, a pouch case 2 composed of an exterior material 2a and a pocket portion 2b, and an electrode 3. Here, the pocket portion 2b is removed after the internal gas is discharged to the outside through the degassing process, and thus there is a problem that a portion of the pouch case 2 is always discarded.

### SUMMARY

### TECHNICAL PROBLEM

The present disclosure is designed to solve the problems of the related art, and therefore the present disclosure is directed to providing a method for manufacturing a secondary battery capable of solving problems occurring in the process of manufacturing a pouch-type secondary battery.

### TECHNICAL SOLUTION

A method for manufacturing a secondary battery according to Embodiment 1 of the present disclosure may include a preparation step of preparing an electrode assembly and an exterior material sheet including a metal layer; a packaging step of packaging the electrode assembly using the exterior material sheet and a cover member; and a coupling step of coupling the cover member and the exterior material sheet by heating or pressurizing the cover member and the exterior material sheet with a sealing belt.

The packaging step may include a first packaging step of wrapping the electrode assembly with the exterior material sheet so that an internal space accommodating the electrode assembly and an exterior material opening allowing the internal space to communicate with the outside are formed; and a second packaging step of inserting the cover member into the exterior material opening.

The coupling step may be a step of coupling the cover member and the exterior material sheet to seal the internal space.

The first packaging step may include a step of positioning the electrode assembly on an upper surface of the exterior material sheet; a step of wrapping the electrode assembly by rolling or folding the exterior material sheet so that one end and the other end of the exterior material sheet meet each other; and a step of bonding or fusing the one end and the other end of the exterior material sheet.

The coupling step may be a step of coupling the cover member and the exterior material sheet by heating or pressurizing the cover member and the exterior material sheet with the sealing belt including a metal wire.

The coupling step may include a heating step of heating the sealing belt; a winding step of winding the sealing belt around the cover member and the exterior material sheet; and a fusion step of fusing the cover member and the exterior material sheet by tightening the sealing belt.

The heating step and the winding step may be performed simultaneously or sequentially.

The heating step may be a step of heating the sealing belt by applying current to a heating wire included in the sealing belt.

The winding step may be a step of winding the sealing belt around the entire area of the exterior material sheet facing the cover member.

In the fusion step, one end and the other end of the sealing belt may be pulled in different directions.

In the fusion step, the temperature of the sealing belt may be maintained between 180 and 220 °C.

The method for manufacturing a secondary battery according to Embodiment 1 of the present disclosure may further include an electrolyte injection step that is performed after the coupling step and injects an electrolyte into the internal space through an electrolyte injection port formed in the cover member.

Meanwhile, in a method for manufacturing a secondary battery according to Embodiment 2 of the present disclosure, the second packaging step may be a step of inserting the cover member, which includes a body portion where an electrode lead is inserted and a gasket surrounding the body portion, into the exterior material opening.

In the coupling step, the gasket may be coupled to the body portion and the exterior material sheet, respectively.

### ADVANTAGEOUS EFFECTS

According to the method for manufacturing a secondary battery of the present disclosure, since a pouch-type exterior material may be provided without molding a cup portion for accommodating an electrode assembly, there is an advantageous effect of increasing the battery capacity by increasing the size of the pouch-type exterior material, freely selecting the material or thickness of the exterior material sheet for manufacturing the pouch-type exterior material, and preventing defects such as cracks from occurring in the pouch-type exterior material.

Additionally, according to the method for manufacturing a secondary battery of the present disclosure, a cover member and an exterior material sheet are coupled by heating or pressurizing the cover member and the exterior material sheet with a sealing belt, so that there is an advantageous effect of improving the coupling force between the cover member and the exterior material sheet.

### BRIEF DESCRIPTION OF THE DRAWINGS

FIG. 1 is a view showing a cup portion of a pouch-type secondary battery.
FIG. 2 is a view for describing that a portion of a pouch case is discarded after a degassing process.
FIG. 3 is a flow chart of a method for manufacturing a secondary battery according to Embodiment 1 of the present disclosure.
FIG. 4 is a perspective view of a secondary battery manufactured according to the method of manufacturing the secondary battery according to FIG. 3.
FIG. 5 is an exploded perspective view of the secondary battery according to FIG. 4.
FIG. 6 is a flow chart detailing a packaging step in a method for manufacturing a secondary battery according to Embodiment 1 of the present disclosure.
FIG. 7 is a perspective view for describing that a cover member and an exterior material sheet are coupled in a method for manufacturing a secondary battery according to Embodiment 1 of the present disclosure.
FIG. 8 is a cross-sectional view showing an internal structure of the sealing belt shown in FIG. 7.
FIG. 9 is a flow chart detailing a coupling step in a method for manufacturing a secondary battery according to Embodiment 1 of the present disclosure.
FIG. 10 is a view for describing that an exterior material sheet is coupled to a gasket in a method for manufacturing a secondary battery according to Embodiment 2 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a method for manufacturing a secondary battery according to the present disclosure will be described with reference to the drawings.

### Embodiment 1

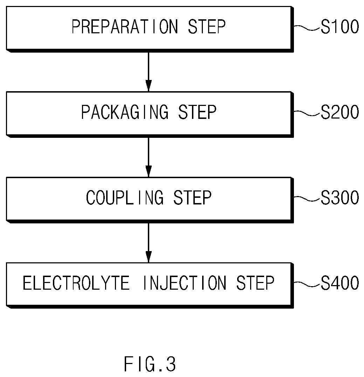

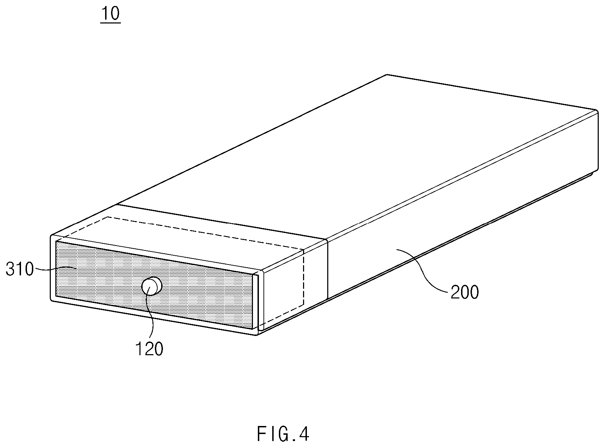

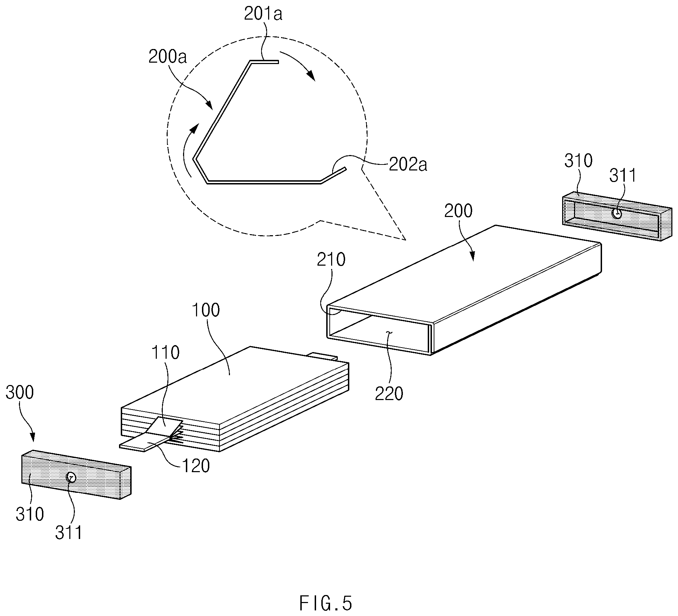

FIG. 3 is a flow chart of a method for manufacturing a secondary battery according to Embodiment 1 of the present disclosure, and FIG. 4 is a perspective view of a secondary battery manufactured according to the method of manufacturing the secondary battery according to FIG. 3. FIG. 5 is an exploded perspective view of the secondary battery according to FIG. 4.

Referring to FIGS. 3 to 5, a method for manufacturing a secondary battery according to Embodiment 1 of the present disclosure may include a preparation step S100 of preparing an electrode assembly 100 and an exterior material sheet 200a including a metal layer; a packaging step S200 of packaging the electrode assembly 100 using the exterior material sheet 200a and a cover member 300; and a coupling step S300 of coupling the cover member 300 and the exterior material sheet 200a by heating or pressurizing the cover member 300 and the exterior material sheet 200a with a sealing belt 400.

The secondary battery 10 manufactured according to the above manufacturing method accommodates the electrode assembly 100 therein according to the method of packaging the electrode assembly 100 using the exterior material sheet 200a and the cover member 300, so that the pouch-type exterior material 200 does not have a cup portion for accommodating the electrode assembly 100. In this case, it is possible to easily increase the capacity of the second battery 10 by increasing the size of the pouch-type exterior material 200, to freely select the material or thickness of the exterior material sheet 200a for manufacturing the pouch-type exterior material 200, and to prevent defects such as cracks from occurring in the pouch-type exterior material 200.

Additionally, in the case of the secondary battery 10 manufactured according to the above manufacturing method, the cover member 300 and the exterior material sheet 200a are coupled to each other by heating or pressurizing with the sealing belt 400, so that the coupling force between the cover member 300 and the exterior material sheet 200a may be improved. In particular, the sealing belt 400 may effectively heat or pressurize the exterior material sheet 200a in contact with a corner portion of the cover member 300, which may prevent the exterior material sheet 200a from being separated from the corner portion of the cover member 300 after a certain period of time.

The electrode assembly 100 is a stack including a positive electrode, a negative electrode and a separator, and may have various structures. For example, the electrode assembly may be a stack type electrode assembly in which a positive electrode, a negative electrode and a separator are stacked in one direction, or a stack-folding type electrode assembly in which a positive electrode, a negative electrode and a separator are stacked in one direction and then folded.

Here, the positive electrode may include a positive electrode current collector and a positive electrode active material coated on the positive electrode current collector, and the negative electrode may include a negative electrode current collector and a negative electrode active material coated on the negative electrode current collector. The separator is an insulating material membrane interposed between the positive electrode and the negative electrode to block contact between the positive electrode and the negative electrode, and a plurality of pores through which positive ions pass may be formed in the separator.

An electrode tab 110 may be connected to an uncoated portion of the electrode (positive electrode and negative electrode) constituting the electrode assembly 100, and the electrode tab 110 may be welded to an electrode lead 120. At this time, a portion of the electrode lead 120 may be exposed to the outside of the secondary battery 10. Specifically, a portion of the electrode lead 120 may pass through a through hole 330 formed in the cover member 300 and be exposed to the outside of the secondary battery 10.

The exterior material sheet 200a may be a sheet having one end 201a and the other end 202a spaced apart from the one end 201a in a predetermined direction. The pouch-type exterior material 200 may be formed by rolling or folding the exterior material sheet 200a so that the one end 201a and the other end 202a of the exterior material sheet 200a meet. At this time, the one end 201a and the other end 202a of the exterior material sheet 200a may be coupled to each other in various ways.

The one end 201a of the exterior material sheet 200a may be coupled to an inner surface or an outer surface of the other end 202a. As shown in FIG. 5, the outer surface of the one end 201a of the exterior material sheet 200a may be coupled to the inner surface of the other end 202a. Additionally, the inner surface of the one end 201a of the exterior material sheet 200a may be coupled to the inner surface of the other end 202a.

Meanwhile, the exterior material sheet 200a may be a laminate sheet including a metal layer such as aluminum or stainless steel. At this time, a resin layer may be formed on each of an outer surface and an inner surface of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be coupled to a cover member 300 to be described later to seal the internal space 220, and the second resin layer may be composed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

The cover member 300 may be coupled to the exterior material sheet 200a to package the electrode assembly 100. Specifically, the cover member 300 is coupled to the pouch-type exterior material 200 formed by rolling or folding the exterior material sheet 200a, and the cover member 300 may transversely block the open exterior material opening 210 formed on both sides of the pouch-type exterior material 200. At this time, the electrode assembly 100 may be accommodated in the internal space 220 formed by the pouch-type exterior material 200 and the cover member 300.

This internal space 220 may be filled with an electrolyte, and the cover member 300 may seal the internal space 220 to prevent the electrolyte from leaking out of the internal space 220. Specifically, the cover member 300 inserted into the exterior material opening 210 that allows the internal space 220 to communicate with the outside may be coupled to the inner surface of the pouch-type exterior material 200, thereby sealing the internal space 220. Here, the inner surface of the pouch-type exterior material 200 may be the second resin layer described above.

The length of a portion of the cover member 300 inserted into the pouch-type exterior material 200 may be formed in various ways. For example, as shown in FIGS. 4 and 5, only a portion of the cover member 300 may be inserted into the pouch-type exterior material 200, so that the remaining portion of the cover member 300 may be exposed to the outside of the pouch-type exterior material 200.

The cover member 300 may be made of a material that is not easily permeable to moisture in order to seal the internal space 220 of the pouch-type exterior material 200 by being coupled to the inner surface of the pouch-type exterior material 200. For example, the cover member 300 may be obtained from metal or resin, or may be obtained from a laminate sheet in which a resin layer is formed on both surfaces of a metal layer.

Additionally, the cover member 300 may have a cuboidal box shape. In this case, four side surfaces of the cover member 300 inserted into the exterior material opening 210 face the inner surface of the pouch-type exterior material 200, and all the four side surfaces of the cover member 300 are formed as flat planes, so that the four side surfaces of the cover member 300 may be firmly coupled to the inner surface of the pouch-type exterior material 200, thereby effectively sealing the internal space 220 of the pouch-type exterior material 200.

At this time, the cover member 300 may be coupled to the inner surface of the pouch-type exterior material 200 in a thermal fusion method to seal the internal space 220 of the pouch-type exterior material 200. Specifically, the cover member 300 and the pouch-type exterior material 200 may be thermally fused to each other by being pressurized with a high-temperature sealing belt 400. The high-temperature sealing belt 400 pressurizes an area where the pouch-type exterior material 200 and the cover member 300 face each other, and the pouch-type exterior material 200 and the cover member 300 may be coupled in the pressurized area to seal the internal space 220.

The sealing belt 400 may uniformly transmit heat and pressure to the pressurized area, which may improve the coupling force between the pouch-type exterior material 200 and the cover member 300. In particular, the sealing belt 400 may effectively heat and pressurize the pouch-type exterior material 200 in contact with the corner portion of the cover member 300, which may prevent the pouch-type exterior material 200 from being separated from the corner portion of the cover member 300 after a certain period of time.

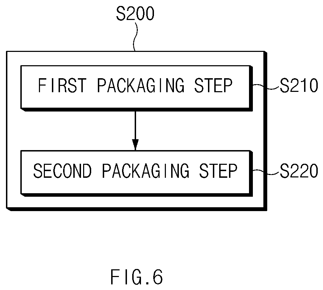

Meanwhile, FIG. 6 is a flow chart detailing a packaging step in a method for manufacturing a secondary battery according to Embodiment 1 of the present disclosure. Referring to FIG. 6, the packaging step S200 may include a first packaging step S210 of wrapping the electrode assembly 100 with the exterior material sheet 200a so that an internal space 220 accommodating the electrode assembly 100 and an exterior material opening 210 allowing the internal space 220 to communicate with the outside are formed; and a second packaging step S220 of inserting the cover member 300 into the exterior material opening 210.

The first packaging step S210 may include a step of positioning the electrode assembly 100 on an upper surface of the exterior material sheet 200a; a step of wrapping the electrode assembly 100 by rolling or folding the exterior material sheet 200a so that one end 201a and the other end 202a of the exterior material sheet 200a meet each other; and a step of bonding or fusing the one end 201a and the other end 202a of the exterior material sheet 200a.

Here, the one end 201a and the other end 202a of the exterior material sheet 200a may be bonded with an adhesive or thermally fused to each other by receiving heat and pressure to form the pouch-type exterior material 200. The internal space 220 in which an electrode assembly 100 is accommodated may be provided inside the pouch-type exterior material 200, and an exterior material opening 210 may be formed at one end and the other end of the internal space 220, respectively.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, since the pouch-type exterior material 200 of the secondary battery 10 according to the present disclosure is prepared by rolling or folding the exterior material sheet 200a, the electrode assembly 100 may be accommodated in the internal space 220 of the pouch-type exterior material 200 without molding a separate cup portion. In this case, the conventional limitation due to the formation of the cup portion in the pouch-type exterior material is not applied, so that the capacity of the secondary battery 10 may be easily increased by increasing the size of the internal space 220. Additionally, the pouch-type exterior material 200 prepared by rolling or folding the exterior material sheet 200a is not formed with a part that decreases in thickness, and thus the occurrence of defects such as cracks in the pouch-type exterior material 200 may be prevented.

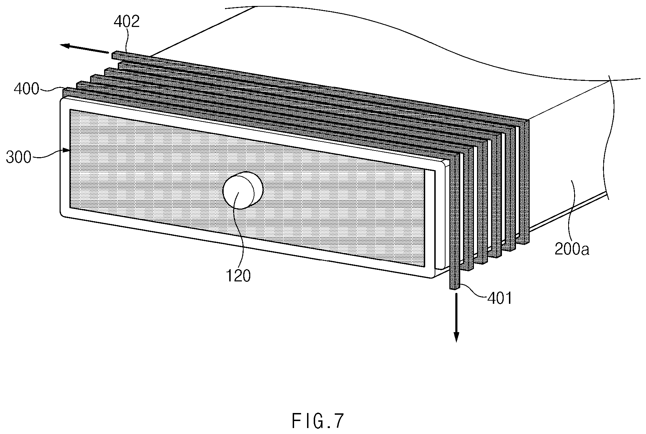

Meanwhile, FIG. 7 is a perspective view for describing that a cover member and an exterior material sheet are coupled in a method for manufacturing a secondary battery according to Embodiment 1 of the present disclosure. FIG. 7 shows that the rolled or folded exterior material sheet 200a and the cover member 300 inserted into the exterior material sheet 200a are pressurized with the sealing belt 400.

Specifically, the sealing belt 400 is wound around the area where the cover member 300 is inserted in the exterior material sheet 200a, and one end 401 and the other end 402 of the sealing belt 400 may be pulled in different directions, respectively. That is, the exterior material sheet 200a and the cover member 300 may be pressurized with the sealing belt 400.

Here, the sealing belt 400 may be maintained at a high temperature, so that the exterior material sheet 200a and the cover member 300 where the sealing belt 400 is wound may receive heat and pressure by the sealing belt 400. In this case, the exterior material sheet 200a and the cover member 300 may be thermally fused to each other to seal the internal space 220.

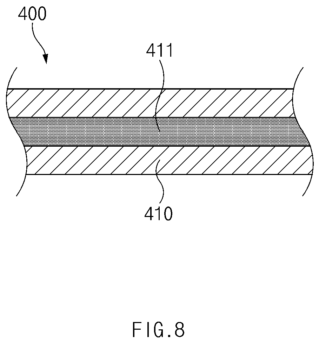

FIG. 8 is a cross-sectional view showing an internal structure of the sealing belt shown in FIG. 7. Referring to FIG. 8, the sealing belt 400 may include a metal wire 410 having a heating wire 411 therein. A user may apply current to the heating wire 411 to increase the temperature of the heating wire 411 and the metal wire 410 surrounding the heating wire.

Meanwhile, the above-described coupling step S300 is a step of coupling the cover member 300 and the exterior material sheet 200a to seal the internal space 220, and may be a step of coupling the cover member 300 and the exterior material sheet 200a by heating and pressurizing the cover member 300 and the exterior material sheet 200a with the sealing belt 400 including a high-temperature metal wire 410.

In this case, the high-temperature sealing belt 400 uniformly pressurizes all the parts where the cover member 300 and the exterior material sheet 200a contact, which may improve the coupling force between the cover member 300 and the exterior material sheet 200a. In particular, the high-temperature sealing belt 400 may effectively pressurize the part where the edge of the cover member 300 and the exterior material sheet 200a contact, so that the edge of the cover member 300 and the exterior material sheet 200a may be effectively coupled. In this case, there is an advantageous effect that the exterior material sheet 200a is not separated from the edge of the cover member 300 even after a predetermined period of time.

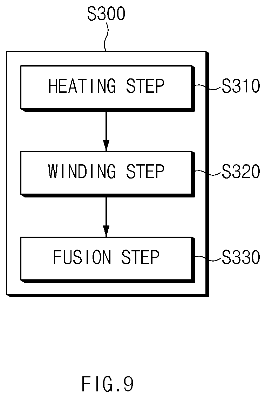

Meanwhile, FIG. 9 is a flow chart detailing a coupling step in a method for manufacturing a secondary battery according to Embodiment 1 of the present disclosure. Referring to FIG. 9, the coupling step S300 may include a heating step S310 of heating the sealing belt 400; a winding step S320 of winding the sealing belt 400 around the cover member 300 and the exterior material sheet 200a; and a fusion step S330 of fusing the cover member 300 and the exterior material sheet 200a by tightening the sealing belt 400. Here, the heating step S310 and the winding step S320 may be performed simultaneously or sequentially.

The heating step S310 may be a step of heating the sealing belt 400 by applying current to a heating wire 411 included in the sealing belt 400. Specifically, the sealing belt 400 may include a metal wire 410 having a heating wire 411, and the user may increase the temperature of the heating wire 411 and the metal wire 410 by applying current to the heating wire 411.

The winding step S320 may be a step of winding the sealing belt 400 around the entire area of the exterior material sheet 200a facing the cover member 300. Specifically, the winding step S320 may be a step of winding the metal wire 410 around the entire area where the cover member 300 is inserted among the exterior material sheet 200a.

Meanwhile, in the fusion step S330, one end 401 and the other end 402 of the sealing belt 400 may be pulled in different directions. As a result, the portion where the sealing belt 400 is wound may receive heat and pressure, and the cover member 300 may be fused to the exterior material sheet 200a. Here, the process of pulling one end 401 and the other end 402 of the sealing belt 400 in different directions may be a process of pulling both ends of a high-temperature metal wire 410 in different directions using a device such as a robot arm.

In the fusion step S330, the temperature of the sealing belt 400 may be maintained between 180 and 220 °C. Specifically, one end 401 and the other end 402 of the sealing belt 400 are pulled in different directions, and while the cover member 300 and the exterior material sheet 200a are fused, the temperature of the metal wire 410 included in the sealing belt 400 may be maintained between 180 and 220 °C. That is, the user may continuously apply current to the heating wire 411 of the metal wire 410 during the fusion step S330 to maintain the temperature of the metal wire 410 between 180 and 220 °C.

In this case, the cover member 300 and the exterior material sheet 200a are pressurized at a uniform temperature during the fusion step S330, and thus there is an advantageous effect of improving the coupling force between the cover member 300 and the exterior material sheet 200a.

Meanwhile, the method for manufacturing a secondary battery according to Embodiment 1 of the present disclosure may further include an electrolyte injection step S400 that is performed after the coupling step S300 and injects an electrolyte into the internal space 220 through an electrolyte injection port formed in the cover member 300. Here, the user may inject the electrolyte into the internal space 220 of the exterior material 200 through the electrolyte injection port 340 in a state of disposing the secondary battery 10 so that the cover member 300 in which the electrolyte injection port 340 is formed faces upward.

Additionally, the method for manufacturing a secondary battery according to Embodiment 1 of the present disclosure may further include a degassing step that is performed after the electrolyte injection step S400 and discharges gas generated during activation of the secondary battery 10 to the outside through the electrolyte injection port 340. Here, the user may induce the gas in the internal space 220 to be discharged by opening the electrolyte injection port 340.

The conventional pouch-type secondary battery has a gas pocket formed by rolling up a portion of the exterior material, and the gas pocket is removed from the exterior material after capturing the internal gas of the exterior material. Therefore, there is conventionally a problem that a portion of the exterior material is repeatedly discarded.

On the other hand, the method for manufacturing a secondary battery according to Embodiment 1 of the present disclosure includes the degassing step that is performed after the electrolyte injection step S400 and discharges gas in the internal space 220 to the outside, which may solve the conventional problem that a portion of the exterior material is repeatedly discarded.

### Embodiment 2

A method for manufacturing a secondary battery according to Embodiment 2 of the present disclosure differs from Embodiment 1 in that a gasket is further included in the cover member. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

The method for manufacturing a secondary battery according to Embodiment 2 of the present disclosure may include a preparation step S100 of preparing an electrode assembly 100 and an exterior material sheet 200a including a metal layer; a packaging step S200 of packaging the electrode assembly 100 using the exterior material sheet 200a and a cover member 300; and a coupling step S300 of coupling the cover member 300 and the exterior material sheet 200a by heating or pressurizing the cover member 300 and the exterior material sheet 200a with a sealing belt 400.

Here, the packaging step S200 may include a first packaging step S210 of wrapping the electrode assembly 100 with the exterior material sheet 200a so that an internal space 220 accommodating the electrode assembly 100 and an exterior material opening 210 allowing the internal space 220 to communicate with the outside are formed; and a second packaging step S220 of inserting the cover member 300 into the exterior material opening 210.

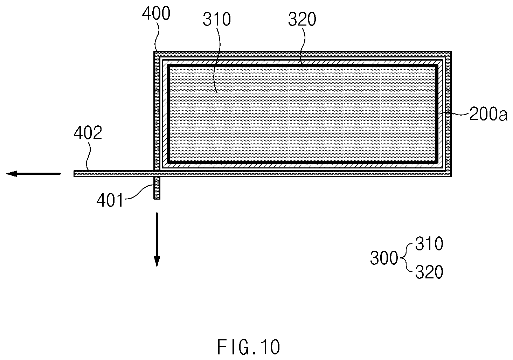

Meanwhile, FIG. 10 is a view for describing that an exterior material sheet is coupled to a gasket in a method for manufacturing a secondary battery according to Embodiment 2 of the present disclosure. Referring to FIG. 10, the cover member 300 may include a body portion 310 into which an electrode lead 120 is inserted and a gasket 320 surrounding the body portion 310. As the cover member 300 is wrapped with an exterior material sheet 200a, the gasket 320 is interposed between the body portion 310 and the exterior material sheet 200a, and the gasket 320 and the exterior material sheet 200a may be coupled using a high-temperature sealing belt 400.

Specifically, one end 401 and the other end 402 of the high-temperature sealing belt 400 may be pulled in different directions, thereby transmitting heat and pressure to the body portion 310, the gasket 320, and the exterior material sheet 200a. Thereafter, the gasket 320 and the body portion 310 may be coupled by thermal fusion, and the gasket 320 and the exterior material sheet 200a may be coupled by thermal fusion.

The gasket 320 is an insulator that surrounds the body portion 310 and may be made of a resin-based material. Typically, the gasket 320 may be made of the same material as the inner surface of the exterior material sheet 200a. Additionally, the gasket 320 may wrap only a part of the body portion 310. As shown in FIG. 10, the gasket 320 may wrap only a part of the body portion 310 in contact with the exterior material sheet 200a.

This gasket 320 is a member that surrounds the body portion 310 and may prevent electrolyte leakage between the exterior material 200 and the body portion 310. At this time, the gasket 320 may serve as a medium for a rigid coupling between the exterior material 200 and the body portion 310.

Additionally, the gasket 320 may have various shapes. For example, the gasket 320 may have a picture frame shape that surrounds a side surface of the outer surface of the body portion 310. Additionally, the gasket 320 may be formed to surround both the inner and outer surfaces of the body portion 310.

In the case of the method for manufacturing a secondary battery according to Embodiment 2 of the present disclosure, the cover member 300 includes the body portion 310 and the gasket 320, and thus the second packaging step S220 may be a step of inserting the cover member 300, which includes the body portion 310 where the electrode lead 120 is inserted and the gasket 320 surrounding the body portion 310, into the exterior material opening 210.

Additionally, in the coupling step S300 performed after the second packaging step S220, the gasket 320 may be coupled to the body portion 310 and the exterior material sheet 200a, respectively, to seal the internal space 220. Specifically, the body portion 310 and the gasket 320 on which surface treatment has been performed are coupled by receiving heat and pressure, and the gasket 320 may be coupled to the inner surface of the exterior material sheet 200a by thermal fusion.

At this time, as described above, the gasket 320 may be made of the same material as the inner surface of the exterior material sheet 200a. Typically, the gasket 320 may be made of materials such as casted polypropylene (CPP), chlorinated polypropylene, polyethylene, ethylene propylene copolymer, polyethylene and acrylic acid copolymer, polypropylene and acrylic acid copolymer, and the like.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 10: | Secondary battery | 100: | Electrode assembly |
| 110: | Electrode tab | 120: | Electrode lead |
| 200: | Pouch-type exterior material | 200a: | Exterior material sheet |
| 201a: | One end of exterior material sheet | 202a: | The other end of exterior material |
| | | | sheet |
| 210: | Exterior material opening | 220: | Internal space |
| 300: | Cover member | 310: | Body portion |
| 311: | Lead insertion hole | 320: | Gasket |
| 400: | Sealing belt | 401: | One end of sealing belt |
| 402: | The other end of sealing belt | 410: | Heating wire |
| S100: | Preparation step | S200: | Packaging step |
| S210: | First packaging step | S220: | Second packaging step |
| S300: | Coupling step | S310: | Heating step |
| S320: | Winding step | S330: | Fusion step |
| S400: | Electrolyte injection step | | |

## Claims

1. A method for manufacturing a secondary battery, comprising:
a preparation step of preparing an electrode assembly and an exterior material sheet comprising a metal layer;
a packaging step of packaging the electrode assembly using the exterior material sheet and a cover member; and
a coupling step of coupling the cover member and the exterior material sheet by heating or pressurizing the cover member and the exterior material sheet with a sealing belt.

2. The method for manufacturing a secondary battery according to claim 1,
wherein the packaging step comprises:
a first packaging step of wrapping the electrode assembly with the exterior material sheet so that an internal space accommodating the electrode assembly and an exterior material opening allowing the internal space to communicate with the outside are formed; and
a second packaging step of inserting the cover member into the exterior material opening.

3. The method for manufacturing a secondary battery according to claim 2,
wherein the coupling step is a step of coupling the cover member and the exterior material sheet to seal the internal space.

4. The method for manufacturing a secondary battery according to claim 2,
wherein the first packaging step comprises:
a step of positioning the electrode assembly on an upper surface of the exterior material sheet;
a step of wrapping the electrode assembly by rolling or folding the exterior material sheet so that one end and the other end of the exterior material sheet meet each other; and
a step of bonding or fusing the one end and the other end of the exterior material sheet.

5. The method for manufacturing a secondary battery according to claim 1,
wherein the coupling step is a step of coupling the cover member and the exterior material sheet by heating or pressurizing the cover member and the exterior material sheet with the sealing belt comprising a metal wire.

6. The method for manufacturing a secondary battery according to claim 1,
wherein the coupling step comprises:
a heating step of heating the sealing belt;
a winding step of winding the sealing belt around the cover member and the exterior material sheet; and
a fusion step of fusing the cover member and the exterior material sheet by tightening the sealing belt.

7. The method for manufacturing a secondary battery according to claim 6,
wherein the heating step and the winding step are performed simultaneously or sequentially.

8. The method for manufacturing a secondary battery according to claim 6,
wherein the heating step is a step of heating the sealing belt by applying current to a heating wire included in the sealing belt.

9. The method for manufacturing a secondary battery according to claim 6,
wherein the winding step is a step of winding the sealing belt around the entire area of the exterior material sheet facing the cover member.

10. The method for manufacturing a secondary battery according to claim 6,
wherein in the fusion step, one end and the other end of the sealing belt are pulled in different directions.

11. The method for manufacturing a secondary battery according to claim 6,
wherein in the fusion step, the temperature of the sealing belt is maintained between 180 and 220 °C.

12. The method for manufacturing a secondary battery according to claim 2, further comprising:
an electrolyte injection step that is performed after the coupling step and injects an electrolyte into the internal space through an electrolyte injection port formed in the cover member.

13. The method for manufacturing a secondary battery according to claim 2,
wherein the second packaging step is a step of inserting the cover member, which comprises a body portion where an electrode lead is inserted and a gasket surrounding the body portion, into the exterior material opening.

14. The method for manufacturing a secondary battery according to claim 13,
wherein in the coupling step, the gasket is coupled to the body portion and the exterior material sheet, respectively.
